# EUROPEAN PATENT APPLICATION

(11) **EP 1 365 321 A2**
(43) Date of publication of application: **26.11.2003**
(21) Application number: 02010131.7
(22) Date of filing: 10.05.2002
(51) Int. Cl.: G06F 9/46

(54) **Multiprocessor system**

(30) Priority: 07.03.2002 JP 2002061576
(71) Applicant: Kabushiki Kaisha Toshiba, Tokyo (JP)
(72) Inventor: Kunimatsu, Atsushi, Minato-ku, Tokyo (JP); Fujiwara, Takashi, Minato-ku, Tokyo (JP); Amemiya, Jiro, Minato-ku, Tokyo (JP); Shirakawa, Kenji, Minato-ku, Tokyo (JP)
(74) Representative: HOFFMANN - EITLE

(57) **Abstract**

A multiprocessor system according to the present invention, comprises a plurality of calculation processors which execute tasks by using data stored in a memory; and a control processor which controls execution of the tasks by said calculation processors; wherein said control processor includes: a dependency relation checking part which checks a dependency relation between a plurality of data when executing the tasks; and a scheduling part which performs access to said memory, data transfer from said memory to said calculation processor, and calculation scheduling in said calculation processors.

## Description

### BACKGROUND OF THE TNVENTTON

### Field of the Invention

The present invention relates to a multiprocessor system having a plurality of processors capable of processing a large amount of data such as image data.

### Related Background Art

Ordinary processors assume the processing of a comparatively small amount of data. Because of this, it is general for the register to use an expensive multiported memory with a small amount of memory capacity. Accordingly, when the multiprocessor system is constructed by using a plurality of ordinary processors, data often has to be transmitted/received between the processors, and control of each processor is complicated.

As the typical multiprocessors among the conventional multiprocessors, a parallel-processor system with shared memory and a vector processor system are well known.

In the parallel-processor system with shared memory, the processor for the calculation unit spontaneously acquires data. Because of this, it is difficult for the program to optimally schedule the processings of each processor. For example, when carrying out overwriting drawings of graphics, small processings are repeatedly carried out, and as a result, a large amount of data is generated. Because of this, in the above-mentioned system, each processor repeats the processings for spontaneously acquiring data many times. Accordingly, it is virtually impossible to optimize the processings of each processor.

Furthermore, in the vector processor system, the host computer controls the processings of the vector processor. In the conventional vector processor system, however, the host computer does not schedule the network access and the memory access of the vector processor, but a compiler schedules these accesses. For example, when the overwriting drawings of graphics is carried out in the conventional vector processor system, the compiler checks all the dependency relation of data in order to schedule the processings, it takes too much time for the compiling processings.

### SUMMARY OF THE INVENTION

A multiprocessor according to an embodiment of the present invention comprises a plurality of calculation processors which execute tasks by using data stored in a memory; and a control processor which controls execution of the tasks by said calculation processors; wherein said control processor includes: a dependency relation checking part which checks a dependency relation between a plurality of data when executing the tasks; and a scheduling part which performs access to said memory, data transfer from said memory to said calculation processor, and calculation scheduling in said calculation processors.

### BRIEF DESCRIPTION OF THE DRAWINGS

Fig. 1 is a block diagram showing schematic configuration of an embodiment of the multiprocessor system according to the present invention.
Fig. 2 is a diagram for explaining the processing contents of the present embodiment.
Fig. 3 is a diagram showing an example of the blend instruction.
Fig. 4 is a diagram which converted the blend instruction into the intermediate instruction.
Fig. 5 is a diagram for explaining operation of the control processor.
Fig. 6 is a flowchart showing operation of the control processor.
Fig. 7 is a diagram showing an example of scheduling management performed the control processor.
Fig. 8 is a flowchart showing an example of scheduling method of the present embodiment.
Fig. 9 is a block diagram showing an example of internal configuration of the scheduling management part.
Fig. 10 is a graph showing effective use rate and transfer speed improvement rate of block data.
Fig. 11 is a block diagram showing an example of the multiprocessor according to the present invention dedicated to image processings.

### DESCRIPTION OF THE PREFERRED EMBODIMENTS

Hereinafter, an embodiment of a multiprocessor system according to the present invention will be more specifically described with reference to drawings.

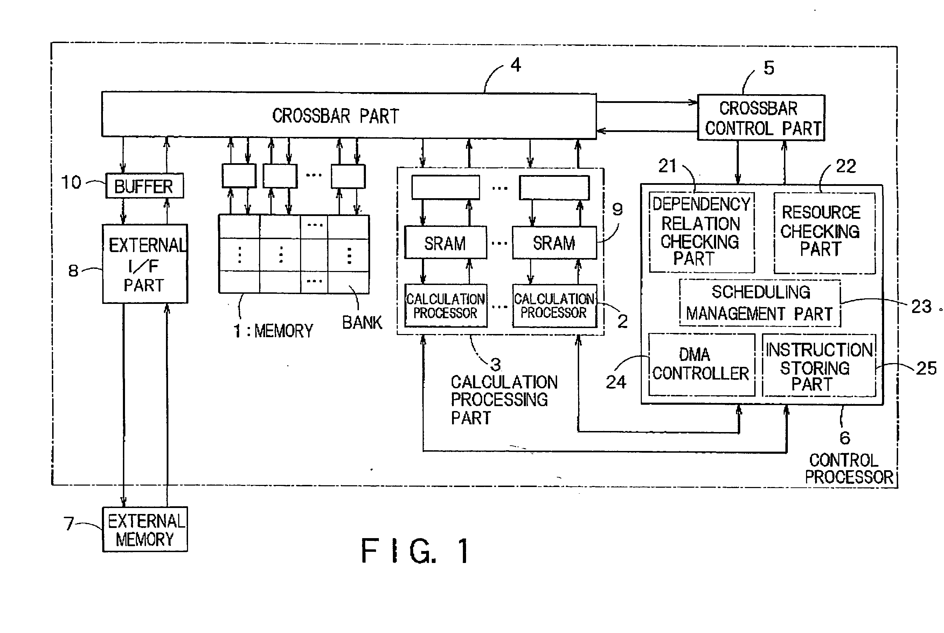

Fig. 1 is a block diagram showing schematic configuration of an embodiment of the multiprocessor system according to the present invention. The multiprocessor system of Fig. 1 has a memory 1 which is composed of a plurality of banks and is capable of accessing by each bank, a calculation processing part (LDALU) 3 including a plurality of calculation processors 2 for performing a prescribed calculation processing by using the block data read out by each bank, a crossbar part (X-bar) 4 for controlling transmission/reception of data between a plurality of calculation processor 2 and the memory 1, a crossbar control part 5 for controlling the crossbar part 4, a control processor (LDPCU) 6 for controlling the calculation processing part 3, and a external interface part 8 for transmitting/receiving data for an external memory 7.

The memory 1, for example, is composed of a one-port memory having a plurality of banks. The calculation processing part 3 has a plurality of calculation processors 2 for executing tasks by using the block data read out by each bank and an SRAM provided in accordance with each calculation processor 2.

The memory 1, the calculation processing part 3 and the external interface part 8 transmit and receive data for the crossbar part 4 via the buffer 10.

The control processor 6 has a dependency relation checking part 21 for checking a dependency relation between block data used by the respective tasks, a resource checking part 22 for grasping the processing states of the calculation processor 2 and the crossbar part 4, a scheduling management part 23 for scheduling data transfer from the memory 1 to the calculation processor 2, access to the memory 1, and data processings by the calculation processor 2, a DMA controller 24 for controlling the DMA transfer between the memory 1 and the calculation processor 2, and an instruction storing part 25 for storing the instructions given by the programmer.

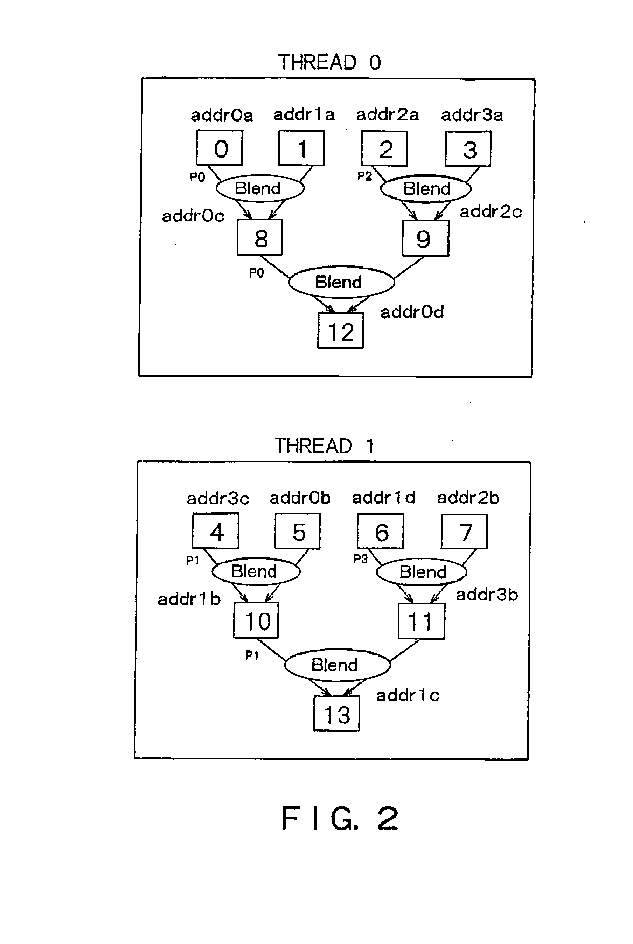

Fig. 2 is a diagram for explaining the processing contents of the present embodiment. As shown in Fig. 2, in the present embodiment, for example, a processing for repeating more than once the tasks for blending two images is treated as one thread, and it is assumed that a plurality of threads which does not have any dependency relation to each other are executed in parallel. here, the tasks commonly used when the same or different composite picture is generated are assumed to be with the dependency relation, and the other tasks are assumed to be without the dependency relation.

In Fig. 2, each block attaching the reference numbers 0-12 expresses the image data, and "addrXX" described at upper side of each block shows storage location address of the corresponding image data. For example, "addrOa" shows the address 0a of the memory 1.

The thread 0 of Fig. 2 stores to the address 0c an image 8 obtained by blending an image 0 stored to the address 0a of the memory 1 with an image 1 stored to the address 1a in the calculation processor 2 of an ID number P0, and stores to the address 2c an image 9 obtained by blending an image 2 stored to the address 2a with an image 3 stored to the address 3a in the calculation processor 2 of the ID number P2, and then stores to the address 0d the image 12 obtained by blending the image 8 with the image 9 in the calculation processor 2 of the ID number P0

The thread 1 of Fig. 2 stores to the address 1b an image 10 obtained by blending an image 4 stored to the address 3c of the memory 1 with an image 5 stored to the address 0b in the calculation processor 2 of the ID number P1, and stores an image 11 to the address 3b obtained by blending an image 6 stored to the address 1d with an image 7 stored to the address 2b in the calculation processor 2 of the ID number P3, and then stores to the address 1c an image 13 obtained by blending the image 10 with the image 11 in the calculation processor 2 of the ID number P1.

The multiprocessor system according to the present embodiment has a blend instruction which is exclusively used for blending two images. The blend instruction is described as blend (p,x,y,z). The "p" expresses the ID number of the calculation processor 2, the "y" expresses the address of a first input block data read out from the memory 1, the "z" expresses the address of a second input block data read out from the memory 1, and the "x" expresses the address of the output block data written to the memory 1. That is, the blend (p,x,y,z) designates that the block data obtained by blending the first input block data of the address y with the second input block data of the address z is stored to the address x.

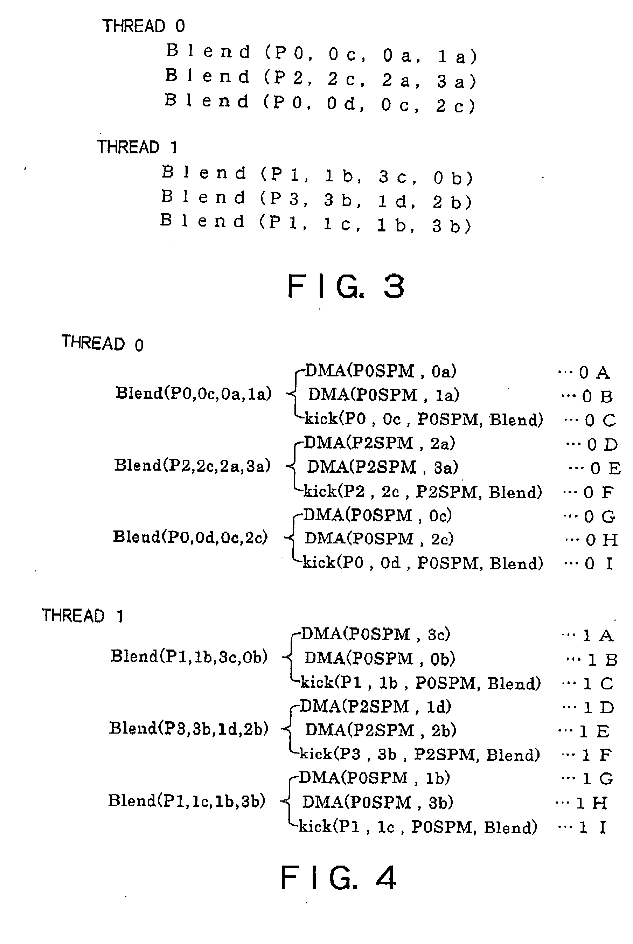

The threads 0 and 1 of Fig. 2 are described by six blend instructions as shown in Fig. 3. The blend (P,0c,0a,1a) of the thread 0 of Fig. 3 corresponds to the processings for generating the image 8 of Fig. 2, the blend (P2,2c,2a,3a) corresponds to the processings for generating the image 9, and the blend (P0,0d,0c,2c) corresponds to the processings for generating the image 12.

The blend (P1,1b,3c,0b) of the thread 1 corresponds to the processings for generating the image 10 of Fig. 2, the blend (P3,3b,1d,2b) corresponds to the processings for generating the image 11, and the blend (P1,1c,1b,3b) corresponds to the processings for generating the image 13.

The instructions shown in Fig. 3 are stored in the instruction storing part 25 shown in Fig. 1. The control processor 6, or a compiler or an interpreter not shown converts the instructions shown in Fig. 3 into intermediate instructions shown in Fig. 4. The converted intermediate instructions may be stored in the instruction storing part 25, or a storing part for storing the intermediate instructions may be independently provided.

As shown in Fig. 3, one blend instruction is converted into three intermediate instructions, and its instruction is converted into a machine language by an assembler not shown and is executed by the control processor 6.

For example, in the blend (P0,0c,0a,1a), first of all, the block data of the address 0a of the memory 1 is subjected to DMA transfer to the SRAM 9 corresponding to the calculation processor 2 of the ID number P0 by the intermediate instruction DMA (P0SPM, 0a). Subsequently, the block data of the address 1a of the memory 1 is subjected to the DMA transfer to the SRAM 9 corresponding to the calculation processor 2 of the ID number P0 by the intermediate instruction DMA (P0SPM, 1a). Subsequently, two block data stored in the SRAM 9 is blended in the calculation processor 2 of the ID number P0 by the intermediate instruction kick (P0, 0c, P0SPM, blend). The blended block data is stored to the address 0c of the memory 1. The last parameter "blend" of the kick (P0, 0c, P0SPM, blend) designates an address tag showing the location of the instructions of the blend processing.

The numerals 0A, 0B and so on described at right side of the intermediate instructions are numbers for designating the respective intermediate instructions.

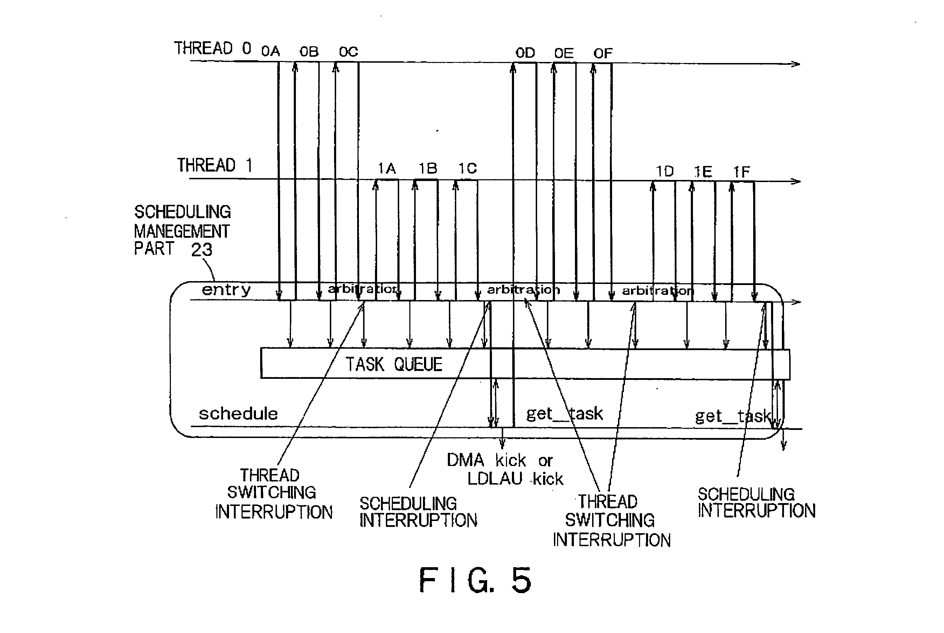

Fig. 5 is a diagram for explaining operation of the control processor 6, and the right direction of Fig. 5 shows time axial. Fig. 5 explains the operation of the control processor in the case of processing the threads 0 and 1 shown in Fig. 4.

First of all, the control processor 6 processes the intermediate instructions 0A, 0 and 0C of the thread 0 in order. At this time, the control processor 6 indicates the DMA transfer for a task queue provided in the scheduling management part 23, and soon executes the processing of the subsequent intermediate instruction.

Thus, the control processor 6 does not perform the DMA transfer by each intermediate instruction, but performs the processing for storing only the indication of the DMA transfer in the task queue.

When the processing of the intermediate instruction OC of the thread 0 is finished, if a switching interrupting signal of the threads is inputted to the scheduling management part 23, the control processor 6 processes the intermediate instructions 1A, 1B and 1C of the thread 1, instead of the thread 0. The control processor 6 indicates the DMA transfer for the task queue of the scheduling management part 23, and soon performs the processings of the subsequent intermediate instruction.

When the processing of the intermediate instruction 1C of the thread 1 is finished, if the scheduling interrupting signal from a timer not shown is inputted to the scheduling management part 23, the scheduling management part 23 schedules the task relating to the execution processing of the intermediate instruction stored in the task queue, and the control processor 6 controls the DMA controller 24 and the calculation processor 2 to execute each task in the scheduled sequence.

The switching interrupting signal of the threads and the scheduling interrupting signal is, for example, inputted periodically inputted from a circuit having time measuring function, such as a timer or a counter in the microprocessor system. Possibly, these interrupting signals are applied from an external circuit of the microprocessor system.

Fig. 5 shows an example in which the scheduling interrupting signal is inputted after the intermediate instructions corresponding to the threads 0 and 1 are executed by every three instructions, respectively, and the thread switching interrupting signal is inputted when the intermediate instructions of the thread 0 or 1 are executed by every three instructions. The timing when these interrupting signals are inputted may be diversely changed in accordance with concrete implementations.

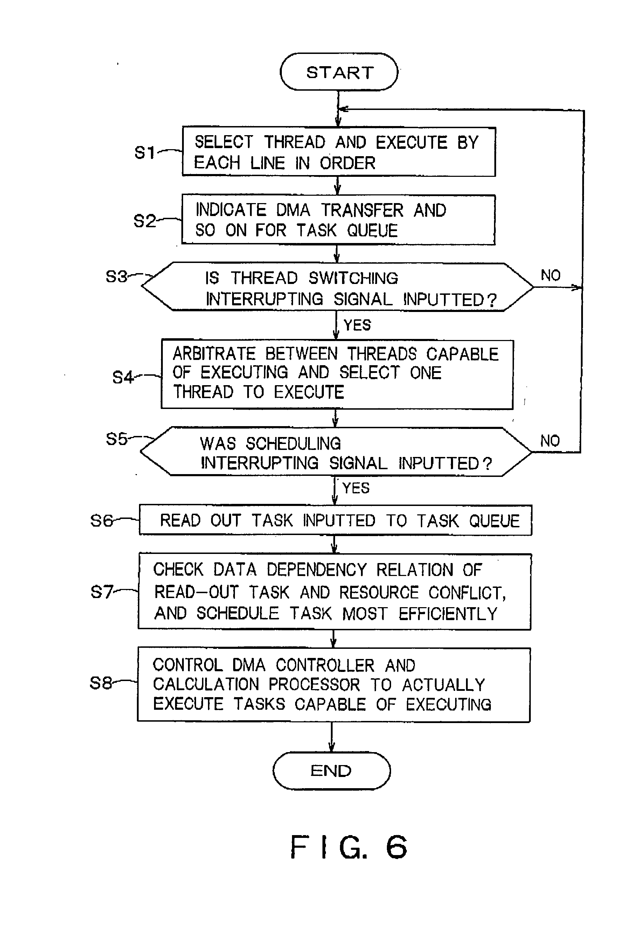

When the operation of Fig. 5 is summarized along timeline, a flowchart shown in Fig. 6 is obtained. First of all, the control processor 6 selects the thread to execute each intermediate instruction in order (step S1), and indicates the DMA transfer for the task queue of the scheduling management part 23 (step S2).

Subsequently, the control processor 6 determines whether or not the switching interrupting signal of the threads is inputted to the scheduling management part 23 (step S3). The processings of the step S1 and S2 are repeated until when the interrupting signal is inputted.

When the thread switching interrupting signal is inputted, the control processor 6 performs an arbitration between the threads capable of executing, and selects one thread to execute it (step S4). in Fig. 5, because there are only two threads, the thread 1 is executed after the thread 0.

After then, when the scheduling interrupting signal is inputted (step S5), the scheduling management part 23 performs the scheduling processings. When the scheduling interruption is inputted, first of all, the scheduling management part 23 reads out the tasks entered to the task queue (step S6), and then checks the data dependency relation of the read-out task and a resource conflict (such as port numbers of the crossbar part 4 or the memory 1), and schedules the tasks most efficiently (step S7). Because the scheduling is capable of implementing as software of the control processor 6, it is possible to diversely change in accordance with the implementations.

Subsequently, the control processor 6 controls the DMA controller 24 and the calculation processor 2 to execute the tasks capable of executing in the scheduled order (step S8).

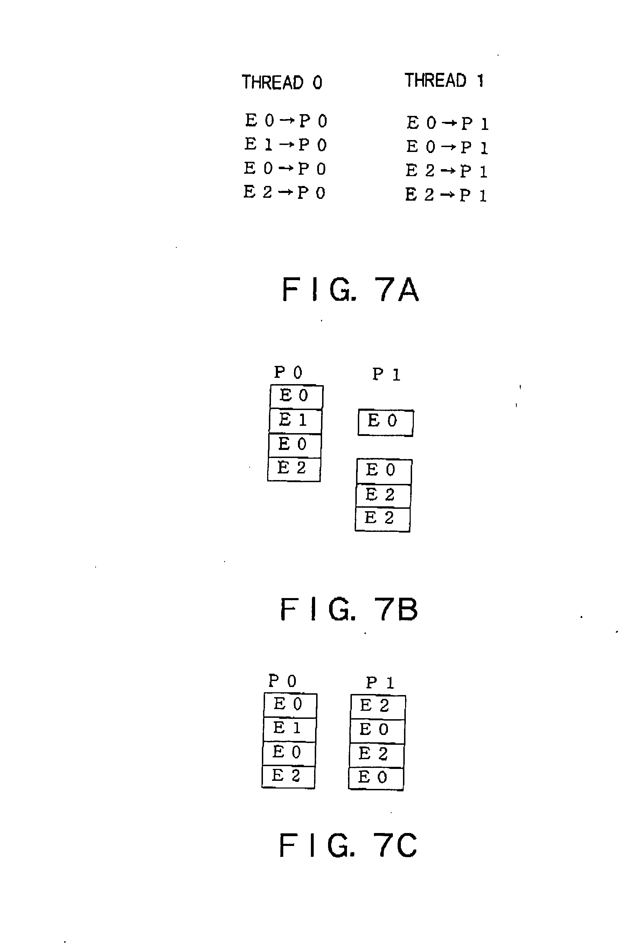

Fig. 7 shows an example of the scheduling management executed by the control processor 6. As shown in Fig. 7A, the tasks E0, E1, E0 and E2 for the calculation processor 2 of the ID number P0 and the tasks E0, E0, E2 and E2 for the calculation processor 2 of the ID number P1 are stored in the task queue. Although there is no limitation to concrete contents of theses tasks, a task for executing the above-mentioned blend instruction will be described hereinafter.

When no scheduling management is performed, the control processor 6 executes in order from the task entered earliest to the task queue. Because of this, first of all, the calculation processors 2 of the ID numbers P0 and P1 execute the task E0. However, because the task E0 executes the same blend instruction, and uses the same data stored in the memory 1 when executing the instruction, it is impossible to simultaneously perform the processings by the calculation processors of the ID numbers P0 and P1. Because of this, as shown in Fig. 7B, the calculation processor 2 of the ID number P1 has to wait until when the calculation processor 2 of the ID number P0 finishes the processing of the task E0. Accordingly, it takes too much time for the calculation processor 2 of the ID number to complete all the processings.

On the other hand, the scheduling management part 23 of the present embodiment schedules the tasks stored in the task queue so that the calculation processor 2 of the ID number P0 and P1 can execute the tasks most efficiently. Fig. 7C shows an example of performing the scheduling so that the calculation processor 2 of the ID number P1 precedently executes the task E2. Because the tasks E0 and E2 execute the blend instruction by using the respective independent data, the different calculation processors 2 can simultaneously execute each task.

Thus, in the present embodiment, because the control processor 6 schedules the tasks of the respective calculation processors 2 so that a plurality of calculation processors 2 execute the tasks in parallel, it is possible to perform the processings of the tasks most efficiently. That is, according to the present embodiment, it is possible to schedule the processings in the respective calculation processor 2 most efficiently.

The task for executing the blend instruction has been described in the above-mentioned embodiment. However, the executed instructions are not limited to the blend instruction. As elements for constituting the tasks, the present embodiment is applicable for the instructions having the following 1) -3).
1) An identifier for designating data that the tasks are necessary. Here, the identifier designates the block data of the memory 1, and a plurality of identifiers may be provided.
2) An identifier for designating a calculator for executing the tasks.
3) An identifier for designating data as a result of executing the tasks.

The identifiers of 1)-3) are not necessarily their own addresses for accessing the memory 1. The identifiers may be tokens corresponding to the addresses. The scheduling management part 23 expresses the ordinal dependency relation of the task as the dependency relation between the identifiers to realize the scheduling of the tasks.

Hereinafter, an example of the scheduling method of the scheduling management part 23 will be described in detail. The processings of the scheduling management part 23 is capable of realizing by either way software or hardware, or by cooperative operation of software and hardware.

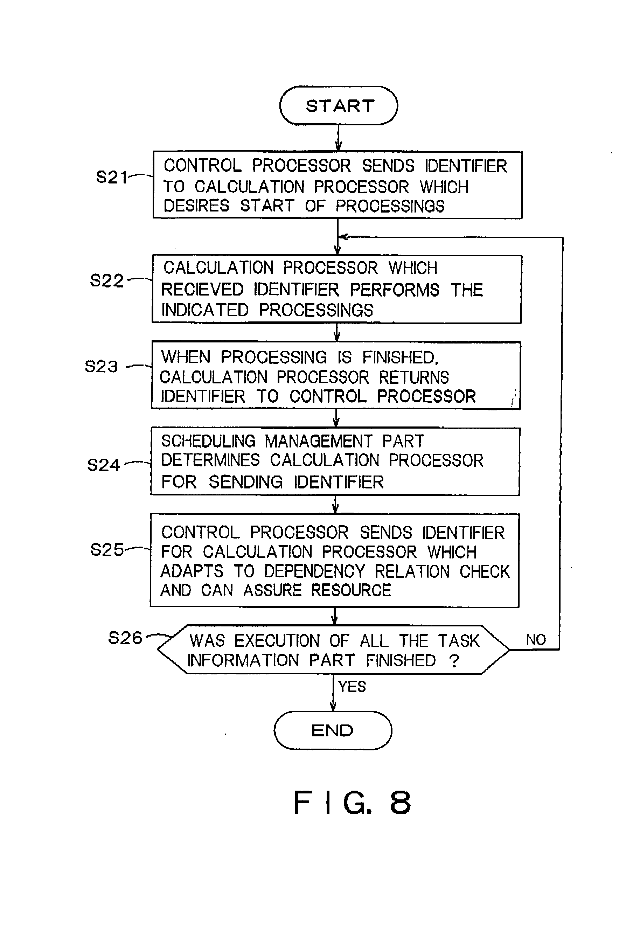

Fig. 8 is a flowchart showing an example of the scheduling method of the present embodiment. The flowchart of Fig. 8 shows an example of managing the start and end of the processings of each calculation processors 2 by using the corresponding identifier.

First of all, the control processor 6 sends the identifier corresponding to the address, to the calculation processor 2 which desires the start of the processings (step S21). The calculation processor 2 which received the identifier performs the designated processing (step S22), and after finishing the processing, returns the identifier to the control processor 6 (step S23).

The control processor 6 sends the returned identifier to the scheduling management part 23 in the control processor 6. The scheduling managing part 23 determines the calculation processor 2 to subsequently send the identifier (step S24). Thus, the scheduling managing part 23 performs all the dependency relation check. The scheduling management part 23 determines the calculation processor 2 to subsequently send the identifier by taking into consideration the resource information such as the processing condition of the calculation processor 2 or the crossbar part 4.

The control processor 6 sends the identifier corresponding to the address for the calculation processor 2 which adapts to the dependency relation check and can assure the resource (step S25).

The above-mentioned operation is repeated until when all the tasks registered to the execution task information part is finished (step S26).

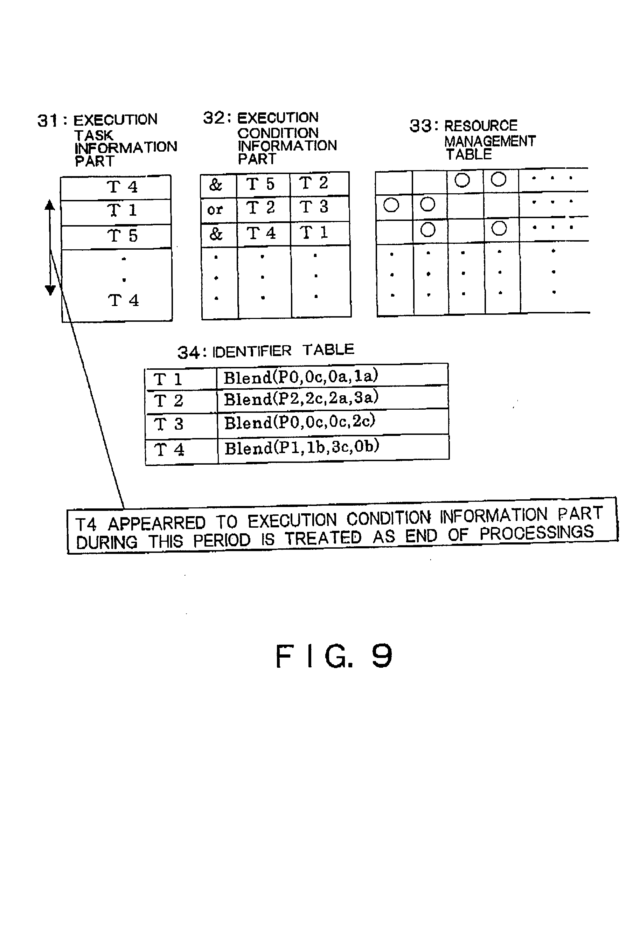

Fig. 9 is a block diagram showing an example of internal configuration of the scheduling management part 23. As shown in Fig. 9, the scheduling management part 23 has an execution task information part 31 for recording a list of the identifiers corresponding to the tasks to be executed, an execution condition information part 32 for recording the execution condition of the tasks, a resource management table 33 for recording the kinds of the calculation processor 2 capable of using for the execution of the tasks and the other resource information, and an identifier table 34 for designating the corresponding relation between the identifiers and the tasks.

The task is, for example, the above-mentioned blend instruction, and the inherent identifier is allocated by each blend instruction. For example, the identifier table 34 of Fig. 9 shows an example in which the identifier T1 corresponds to blend (P0,0c,0a,1a), the identifier T2 corresponds to blend (P2,2c,2a,3a), the identifier T3 corresponds to blend (P0,0c,0c,2c), and the identifier T4 corresponds to blend (P1,1b,3c,0b).

The condition recorded to the execution condition information part 32 corresponds to the identifier recorded to the execution condition information part 31. For example, in Fig. 9, when the blend instruction corresponding to the identifier T2 and the blend instruction corresponding to the identifier T5 are executed, the blend instruction corresponding to the identifier T4 of the execution task information part 31 is executed. When the blend instruction corresponding to the identifier T2 or the blend instruction corresponding to the identifier T3 is executed, the blend instruction corresponding to the identifier T1 of the execution task information part 31 is executed.

When the execution task information part 31 is finished the execution of the blend instruction corresponding to the identifier T4, the execution condition information part 32 treats all the recorded identifier T4 as the end of the processings. If not being able to allocate many bit fields to the identifiers, there is a case in which a plurality of T4 appear to the execution task information part. In this case, T4 which is treated as the end of the processings is treated as the tasks of the slots between the T4 in the execution task information part and the subsequent T4.

The execution task information part 31 refers the resource management table 33 when executing the blend instruction corresponding to the identifier T4, and determines the calculation processor 2 for executing the corresponding blend instruction. The scheduling management part 23 refers the information of the resource management table 33, and determines the kinds of the calculation processors 2 for executing the blend instruction and the timing for executing the blend instruction.

When the determined calculation processor 2 finishes the processing, the calculation processor 2 releases the resource, and the release is recorded to the resource management table 33. Furthermore, when a plurality of processors 2 performed a request for the same resource, as a rule, the blend instruction published on ahead is processed by priority.

The multiprocessor system according to the present embodiment reads out data in unit of the block data. It is desirable to set data size of the block data to be equal to or more than about 1 kilobyte. This is adequate because chunk size of a general flame buffer is 2 kilobyte. Data size of the optimun block data changes in accordance with the implementation.

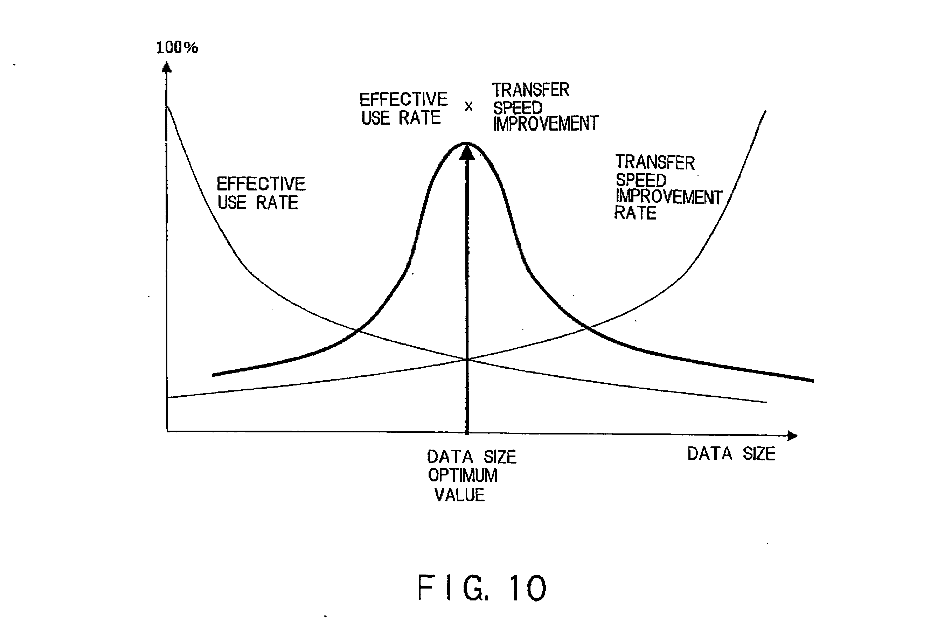

Fig. 10 is a graph expressing an effective use rate Knowing ratio of data effectively used for the calculation processings in the block data and a transfer speed improvement rate of the block data to the calculation processor 2. The higher the effective use rate becomes, the smaller the data size is. The higher the transfer speed improvement rate becomes, the larger the data size is.

Thus, the block data is data size equal to or more than 1 kilobyte, and a few cycle of the system clock of the ordinary processor is necessary for the transfer and the processings of the block data. Because the memory 1 and the calculation processor 2 perform the processings in unit of the block data, it is possible to allow the control processor to operate by a clock which operates the processing time of the block data as a unit. Therefore, it is possible to allow the control processor 6 to operate by a clock later than the system clock of the ordinary processor. Accordingly, it is unnecessary to use expensive and speedy components and high-speed processes, thereby facilitating the timing design of hardware.

Although the number of the calculation processors 2 is not limited, as the number of the calculation processors 2 increases, it is desirable for the calculation processor 2 to enlarge data size of the block data to be processed at once. Therefore, the processing time in one calculation processor 2 lengthens, and it becomes unnecessary for the control processor 6 to often switch the calculation processor 2, thereby reducing the processing burden of the control processor 6.

Furthermore, there are a method of raising the frequency of the entire multiprocessor system and a method of increasing the number of the calculation processor 2 in order to improve performance of the entire multiprocessor system. It is desirable to increase the number of the calculation processor 2 and to enlarge the size of the block data to be processed by each calculation block.

### (Second Embodiment)

A second embodiment according to the present invention is a multiprocessor system dedicated to image processings.

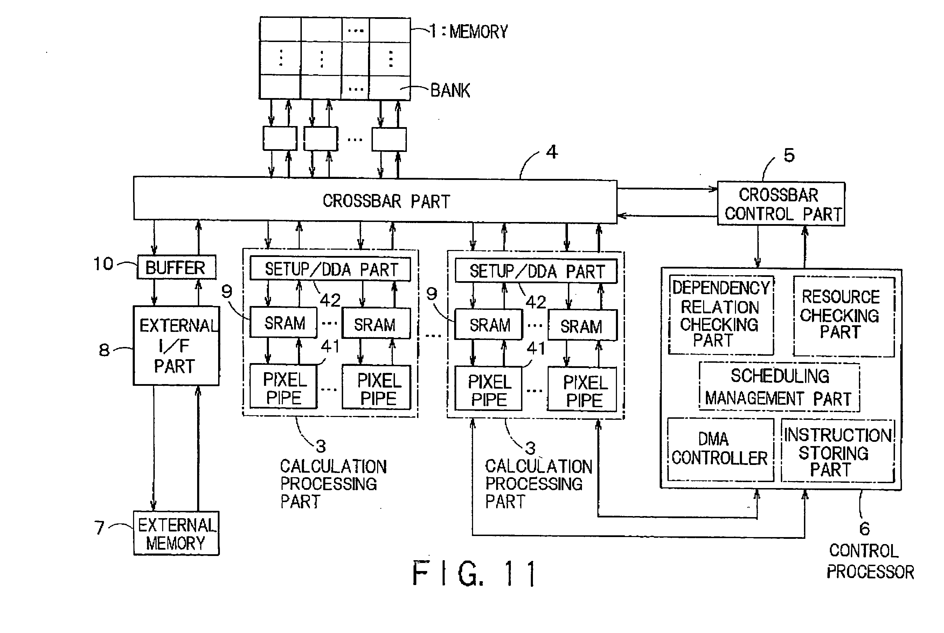

Fig. 11 is a block diagram showing the second embodiment of the multiprocessor system according to the present invention. As shown in Fig. 11, the multiprocessor system of Fig. 11 has a plurality of calculation processing part (LDALU) 3 for performing image processings separate from each other, the control processor (LDPCU) 6, and a memory 1, which are connected to the crossbar part 4.

The calculation processing part 3 has a plurality of pixel pipe 31, an SRAM (SPM) 9 connected to each pixel pip 31, and a setup/DDA part 32 for performing preparation processing.

The pixel pipe 31 in each of the calculation processing part corresponds to the calculation processor 2 of Fig- 1, and performs image processings such as rendering of the polygons or template matching.

The control processor 6 of Fig. 11 checks the dependency relation of the block data used by the task for image processings, and schedules the operation of the pixel pipe 31 in the calculation processing part 3 based on the check result. Therefore, it is possible to allow each pixel pip 31 to operate in parallel, and to perform various image processings at very high speed.

In the above-mentioned embodiment, although an example in which a plurality of calculation processors 2 are provided in the calculation processing part 3 has been described, the present invention is applicable for only one calculation processor 2.

In the above-mentioned embodiment, although an example of performing the processings for blending the image data has been described, the present invention is applicable for various calculation processings besides the blending processings of the image data.

At least one part of the block diagram shown in Fig. 1, Fig. 5, Fig. 9 and Fig. 11 may be realized by software instead of hardware.

## Claims

1. A multiprocessor system, comprising:
a plurality of calculation processors which execute tasks by using data stored in a memory; and
a control processor which controls execution of the tasks by said calculation processors;
wherein said control processor includes:
a dependency relation checking part which checks a dependency relation between a plurality of data when executing the tasks; and
a scheduling part which performs access to said memory, data transfer from said memory to said calculation processor, and calculation scheduling in said calculation processors.

2. The multiprocessor system according to claim 1, wherein said calculation processor accesses said memory in block unit of data.

3. The multiprocessor system according to claim 1, wherein said dependency relation detecting part detects the dependency relation between a plurality of data commonly used when executing the same or different tasks.

4. The multiprocessor system according to claim 1, further comprising a data transfer control part which controls data delivery between said memory and said calculation processors,
wherein said scheduling part performs the scheduling by taking into consideration a transfer control signal outputted from said data transfer control part.

5. The multiprocessor system according to claim 1, further comprising an instruction storing part which stores macro instructions including an identifier configured to discriminate the processing contents executed by said calculation processor, a first address on said memory which designates storage location of data used as an input data by said calculation processors, and a second address on said memory which designates storage location of the calculation result by said calculation processor,
wherein said dependence checking part checks the dependency relation between a plurality of data based on said first and second addresses.

6. The multiprocessor system according to claim 1, further comprising:
a condition table which records the dependency relation between the tasks based on an identifier which identifies the task to be executed; and
a resource management table which records execution condition information of the task to be executed and resource information used when each task is executed,
wherein said dependency relation checking part checks the dependency relation of data used by the task to be executed based on the information recorded to said resource management table.

7. The multiprocessor system according to claim 1,
wherein said data is image data; and
said dependency relation checking part determines data commonly used when generating the same or different blending image to be with the dependency relation.

8. The multiprocessor system according to claim 1, wherein size of said data is set to be equal to or more than 1 kilobyte.

9. The multiprocessor system according to claim 8, wherein as the number of said calculations configured to execute a plurality of tasks increases, size of said data is enlarged.

10. The multiprocessor system according to claim 1, wherein said control processor performs the processing operation based on clocks operating on the basis of time unit necessary for transmission /reception of said data between said memory and said calculation processor.

11. The multiprocessor system according to claim 1, wherein said memory is a one-port memory divided into a plurality of banks.

12. The multiprocessor system according to claim 1, further comprising a buffer for data transfer between said memory and said calculation processor, and a buffer for data processing by said calculation processor in order to perform in parallel data transfer between said memory and said calculation processor, and data processings by said calculation processor.
